# EUROPEAN PATENT SPECIFICATION

(11) **EP 0 390 804 B1**
(45) Date of publication and mention of the grant of the patent: **06.04.1994**
(21) Application number: 88909794.5
(22) Date of filing: 14.11.1988
(51) Int. Cl.: B29C 67/14, B60C 9/00

(54) **A METHOD AND APPARATUS FOR THE MANUFACTURE OF PLY FABRIC MATERIAL**
VERFAHREN UND VORRICHTUNG ZUM HERSTELLEN VON VERSTÄRKTER LAGE
PROCEDE ET APPAREIL DE FABRICATION D'UN MATERIAU DE NAPPE A PLIS

(30) Priority: 13.11.1987 GB 8726626
(43) Date of publication of application: 10.10.1990
(73) Proprietor: BRIDGESTONE/FIRESTONE, INC., Akron, Ohio 44317 (US)
(72) Inventor: PERKINS, David, John, Bridgwood, Liverpool L25 6JE (GB); HOLROYD, Colin, Crossens, Southport Lancashire PR9 9PU (GB)
(74) Representative: Dearing-Lambert, Peter Richard
(86) International application number: GB8800983
(87) International publication number: WO8904246

(56) References cited:
- DE-B- 2 100 247
- FR-A- 1 243 184
- FR-A- 1 316 003

## Description

This invention relates to apparatus for the manufacture of ply fabric material and in particular, although not exclusively, to the manufacture of ply fabric material for use in the construction of reinforced elastomeric articles such as radial or cross ply type pneumatic tyres.

In the manufacture of flexible reinforced polymeric sheet material which is commonly known as ply fabric material, especially in connection with the manufacture of pneumatic tyres, it is established practice to employ a large calender which produces two superimposed and unvulcanised rubber films or veneers between which is fed a textile fabric reinforcing web of a width equal to that of the films. The fabric reinforcing web comprises a plurality of mutually parallel warp cords which extend lengthwise between the films and transversely extending weft elements which assist in maintaining relative alignment of the warp cords during calendaring. During calendaring the fabric web becomes impregnated by the unvulcanised rubber films.

The resulting long length rubberised ply fabric material is batched by winding into large rolls. Subsequently it is cut into individual reinforcement sheets of rhomboidal or rectangular shape and the original side edges of the sheets when in the initial long length roll are then joined successively in a side-by-side manner such that there is produced a new re-orientated length of material in which the cut edges form the new outer edges of the re-orientated length. The new length of material is then batched into one or more further, processed rolls.

The processed rolls so formed are then transported to tyre building machines where the fabric is fed out, wound around a tyre building former to create a band which extends fully around the former, cut to length and completed with an overlap joint.

When applied around the former the warp cords will lie parallel with the axis of the former in the case of long length ply fabric which was cut into rectangular sheets or at an oblique angle, typically in the range from 0 degrees to 70 degrees in the case where the ply fabric was formed into rhomboidal shaped sheets.

The manufacture, processing and handling of such large rolls of ply fabric necessitates the use of large, heavy and costly equipment which is expensive to run and maintain and which is not well adapted to producing articles of a range of sizes.

Additional problems can arise in the case of tyre fabric having warp cords made of high tensile wire and in particular cords of a cabled construction. It is then necessary to provide large creels containing several hundreds of drums of single wires and this takes up a considerable amount of factory floor space.

Each wire must be fed through its own tensioning system and a number of collecting and separating frames before entering a final collecting frame and then passing over guide rollers into a calender. Threading the large number of wires is time-consuming and costly.

The multiplicity of wires are fed between two layers of unvulcanised rubber compound which the nip of the calender causes to impregnate into the spaces around and between the wires. The resulting long length ply fabric is then batched by winding into large rolls for subsequent storage and later transported to fabric cutters. At the fabric cutters the rubberised ply fabric is cut into sheets which are then joined in a side-by-side manner as described above in respect of textile reinforced ply fabric.

Thus many of the problems encountered in producing textile reinforced ply fabric material arise also in producing wire reinforced ply fabric material.

Another method suitable for the manufacture of reinforced elastomeric fabric is described in DE-A-2100247 and comprises helically winding strip material around a rotating drum to form an annulus of reinforced elastomeric material which is then cut across its width to form a sheet of ply fabric. The method of helically winding strip material is referred to also in US-A-3885594 which describes a method of manufacturing a flexible reinforced pipe by the use of a mandrel belt arranged to move in a helical path so that a reinforced strip applied to the mandrel belt is caused to move axially relative to the mandrel and thereby enable pipe to be manufactured in a continuous long length manner on a mandrel of relatively short length.

An object of the present invention is to provide apparatus to mitigate or overcome the above described problems associated with established practices for the manufacture of textile or wire reinforced ply fabric material or like reinforced polymeric sheet material.

In accordance with one of its aspects the present invention provides mandrel station apparatus for the manufacture of ply fabric material comprising a mandrel means, strip guide means associated with said mandrel means to guide strip material for helical winding around the mandrel means and cutter means operable to move relative to the mandrel means to cut said wound material in situ on the mandrel means, characterised in that said mandrel means comprises at least two rotatably mounted support drums, an endless support belt which extends around said drums and a belt guide means assembly around which the belt extends between the drums and which assembly is arranged to guide the belt whereby it defines a peripherally discontinuous mandrel support surface, said cutter means being arranged for traversing movement relative to the mandrel means in the region of said belt guide means assembly and said cutter means being operable to move relative to the mandrel means whereby whilst said wound material is in situ on the mandrel means it is cut in the direction of and at a position aligned with the discontinuity in the mandrel support surface.

The cutting operation may be performed to cut the tubular structure parallel with the length of the mandrel means thereby to result in a rectangular shaped sheet. Alternatively the cutting operation may be performed to cut the tubular structure helically relative to the longitudinal axis of the mandrel means thereby to result in a sheet of rhomboidal shape. The helical cut may be obtained by moving cutter means helically relative to the mandrel means or by moving the cutter means across the width of the mandrel means, preferably in the direction of the length of the mandrel means, whilst simultaneously rotating the tubular structure on the mandrel means. The latter method of helical cutting has the advantage that the angle of the cut may be varied easily by changing the speed of traverse of the cutter relative to the speed of rotation of the tubular structure and there is then no need to provide means for enabling a cutter to move relative to the mandrel means in any of a range of helical paths.

Preferably the apparatus is employed in a method which comprises also using or forming and using an elongate strip of flexible polymeric material of a kind, and/or formed by a method, the subject of our co-pending International Patent Application of even date entitled "Flexible reinforced polymeric material" published under the number WO 89/04245.. That elongate strip may be described as a strip having uncovered edge regions . During helical winding on the mandrel means portions of neighbouring edge regions may be caused to overlap and optionally interlock to form a helical joint the thickness of which corresponds with the thickness of the main body of the strip material. Either one strip may be wound around the mandrel means or two or more strips may be wound simultaneously in the manner of a multi-start helical thread.

The apparatus may be employed in a method which further comprises applying the cut sheet material to a former, such as a tyre building former, with the warp cords extending obliquely or at right angles relative to a plane perpendicular to the longitudinal axis of the former.

The belt guide means assembly preferably is of a kind which guides the belt around a locally inwardly extending path such that said discontinuity is in an externally visible support surface provided by the endless support belt.

The cutter means may be of a kind operable to traverse the mandrel support surface in synchronism with rotation of the support belt.

Additionally the apparatus may comprise applicator means for cutting, ho lding and feeding reinforced strip material, also referred to as a "tape", to the mandrel support surface, transfer means for transferring the mandrel means from a strip winding station to a cutting and removal station, handling means for removing cut material from the mandrel support surface and drive means to drive the endless support belt.

A typical method in accordance with the present invention for manufacturing a sheet of ply fabric material starts with the production of a composite and consolidated reinforced tape in which a plurality of parallel warp cords are fed under a predetermined tension from a creel to a collecting frame which gathers the cords together into parallel alignment prior to feeding into a calender where they are sandwiched between and impregnated into two rubbery films.

The reinforcement filaments of the cords may be of any material generally used in tyre reinforcement manufacture, for example rayon, nylon or steel. The filaments may be in the form of cord which is treated to enable it to adhere to rubber but no rubber coating is necessary prior to the cord entering the calender, which eliminates handling problems usually associated with rubberised cords.

Application of the tape to a rotatable mandrel means takes place through an applicator means, which travels over the mandrel support surface parallel to its longitudinal axis, at a speed which is related to the belt speed so as to give the correct and carefully controlled overlap of each successive turn of the tape.

The width of the tape may be varied selectively by means of interchangeable sleeves in the calender and by varying the number of cords passing through the calender. Thus a range of lengths of tubular ply fabric of helically wound tape as measured in the direction of the axis of the mandrel means can be achieved.

The mandrel means may comprise a mandrel support surface the effective peripheral length of which is selectively variable in order that a wide range of sizes of ply fabric material may be produced without wastage.

When a sufficient length of tape has been produced and fed to the mandrel means it is cut at the tape applicator so as to bring the cut end in line with the start of the wind.

The mandrel means is transferred to a cutting and ply removal station where a cutter runs substantially parallel to the axis of the mandrel means, or at some angle thereto, depending on the bias angle required at the tyre building machine. The cut line preferably is coincident with the starting and finishing ends of the tape, so as not to create any wastage.

The line of the cutter may be set at a small angle to the axis of the mandrel means in order to compensate for the slight angle produced by helical winding. This enables production of fabric which has cords extending at right angles to the cut edges.

If the cut is made at a greater angle than this to the axis of rotation of the mandrel means the resulting ply pieces will have cords extending at an oblique angle to the cut edges. This is what is referred to as a "bias-cut fabric".

After cutting the tubular ply of fabric into a sheet the belt may be rotated to hung a raised cut edge to a set position below the mandrel means in order for a carriage to move into position and remove the ply fabric sheet.

The carriage contains means for clamping the exposed edge of the cut ply, so that it may be pulled off the surface of the mandrel means and laid upon a component carrier whereby the cut ply edges overhang the edges of the carrier.

The carriage also contains means for sensing the outer edges of the ply pieces so as to centralise the ply accurately upon the carrier. This compensates for the variation of the positions of subsequent ply pieces around the mandrel means due to the helical winding effect. In addition, stepper motors within the carriage control the position of the carrier for precise alignment of the curler relative to the ends of the ply. Means is provided for securing the ply to the carrier.

Embodiments of the invention specific to textile ply fabric used in radial tyre production will now be described by way of example with reference to the accompanying diagrammatic drawings, in which:
Figure 1 is a view of apparatus for forming tyre fabric in accordance with the invention,
Figure 2 is a sectional view of one form of the upper half of a tape,
Figure 3 is a sectional view of the lower half of a tape which is complimentary to the top half shown in Figure 2,
Figure 4 is a sectional view of another form of the upper half of a tape,
Figure 5 is a sectional view of the lower half of a tape which is complimentary to the top half shown in Figure 4,
Figure 6 is a sectional view of the composite consolidated tape produced by both forms shown in Figures 2, 3, 4 and 5,
Figure 7 is an isometric view of a mandrel means showing a completed tubular winding of tape,
Figure 8 is a longtitudinal sectional view of the final tubular ply fabric envelope as it appears on the mandrel means showing the special ends produced by use of a tape in the form shown in Figure 6,
Figure 9 is a view of the mandrel means at the ply cutting and removal station showing a cutter and clamps for gripping the ply on the carriage, prior to removal of the ply from the mandrel means,
Figure 10 is a view of a six-roll calender looking downstream and showing means of adjusting the width of tape and means of adjusting the final guage of the tape,
Figure 11 is a plan view of the apparatus showing that the winding station and the ply cutting/removal station may be part of a turret which may consist of one or more winding and ply cutting/removal stations, and
Figure 12 is a plan view of an alternative layout showing a shuttle system, whereby one tape producing apparatus winds tape onto one or other of two mandrel means fitted to a carriage which is able to shuttle from one ply cutting/removal station to another.

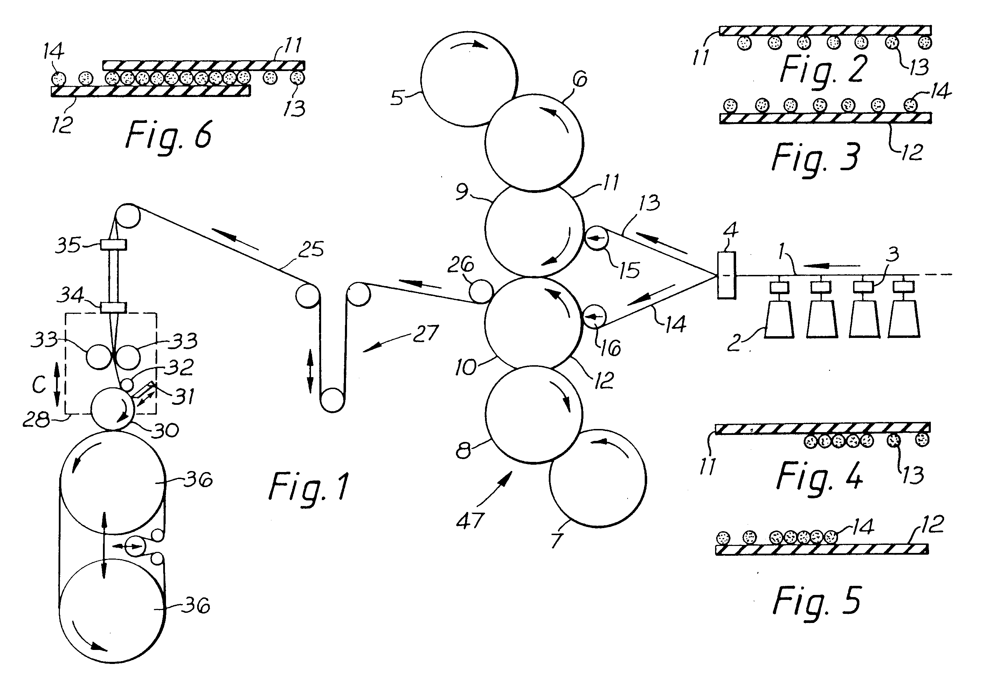

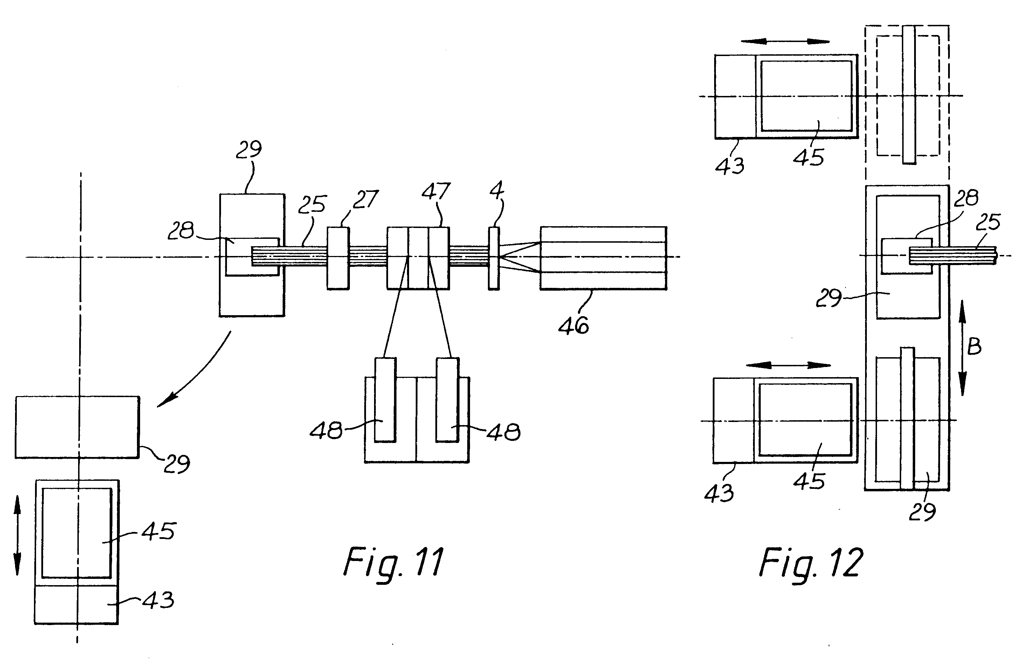

Referring first to Figures 1 - 4, Figure 1 shows a diagrammatic view of apparatus in accordance with the invention in which pre-treated cords 1 are fed from cheeses or cones 2 in a creel 46 (shown in Figure 11) through individual tensioning units 3 to a cord collecting frame 4.

At this point the cords may be divided into two sets of cords of many different configurations, prior to being fed into the central nip of a six-roll calendar 47 (shown in more detail in Figure 11). Rubbery compound produced by two small cold feed extruders 48 (see Figure 11) is introduced in rod form into the calendar at two locations: firstly between calendar rolls 5 and 6 and secondly between rolls 7 and 8 (see Figure 1).

A small rolling bank of compound (not shown) is maintained between rolls 6 and 9 and between rolls 8 and 10, these paired rolls respectively producing the upper 11 and lower 12 films of rubber for the contruction of the tape.

Rolls 5, 7, 9 and 10 are male rolls which fit closely inside the female rolls 6 and 8. The rolls are constructed in such a manner that changes in width can quickly be achieved and bearing housings for the rolls are mounted in such a way that rubber guages can be changed easily.

An upper set of cords 13 from the collecting frame 4 passes over grooved guide and pressure roller 15, which embeds the cords into the rubber veneer 11 against the calendar roll 9. Similarly a lower set of cords 14 from the collecting frame 4 passes over a grooved guide and pressure roller 16 which embeds the cords into the rubber veneer 12 against the calendar roll 10.

The upper and lower sets of cords 13 and 14, respectively, are so arranged as to be complimentary to each other. For example, they may be arranged as shown in Figures 2 and 3, or Figures 4 and 5, or in a variety of other ways including those described in our aforementioned co-pending United Kingdom Patent Application of even date entitled "Flexible Reinforced Polymeric Material".

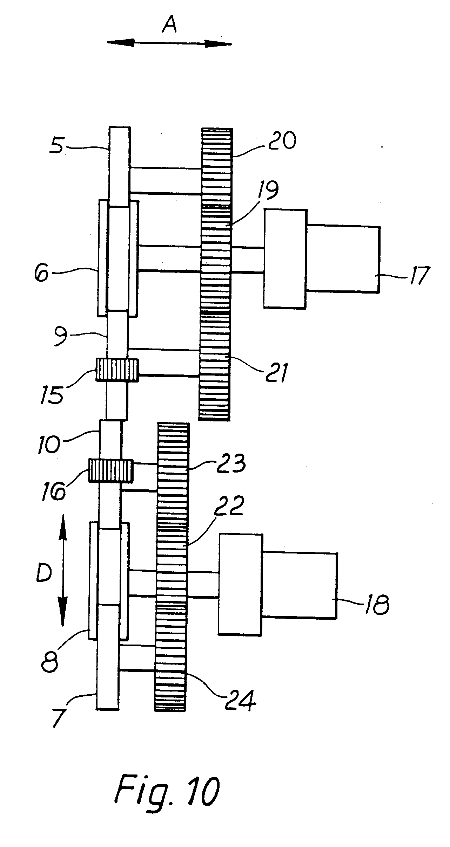

If either of the configurations shown by Figures 2 - 5 are used the final form of the tape appears as shown in Figure 6, with the upper and lower rubber veneers 11, 12 transversely offset. The staggering of the upper and lower veneers 11, 12 is achieved by offsetting the upper half of the calender with respect to the lower half, as shown in Figure 10. This offset is important in order to achieve the "jointless" ply construction.

The upper half of the calender, consisting of rolls 5, 6 and 9, is able to move sideways as indicated by arrow A of Figure 10 in order to achieve the offset. Geared motors 17 and 18 drive the upper and lower halves of the calender through respective gear sets 19, 20 and 21 and 22, 23 and 24. The final nip between rolls 9 and 10 is adjustable by movement of the lower half of the calender in the direction of arrow D in order to achieve the desired thickness of the resulting composite ply fabric tape 25. The ply fabric tape 25 is stripped off roll 10 by a contact roller 26 and then passes through a festoon 27, which controls the speed of the calender. The tape 25 is then fed to a tape applicator 28 which is able to traverse in the direction of arrow B of Figure 12 across the face of a mandrel means, hereinafter referred to as a mandrel 29, parallel to its axis, by means of a driven leadscrew (not shown).

The tape applicator 28 may be raised and lowered as shown by the direction of arrow C in Figure 1 and contains a laying/pressure roller 30, a cutter unit 31, gripping roller 32 and guide rollers 33. Also mounted on the tape applicator 28 are a pair of guide rollers 34 which, together with a similar pair of rollers 35 mounted on a fixed frame (not shown) positioned above and at a suitable distance from the lower rollers, turn the tape through 90 degrees in order to accommodate the oscillation of the applicator across the face of the winding member in the direction of arrow B.

The leading end of the tape 25 is laid onto the winding surface of mandrel 29 by lowering the applicator 28 so that the laying/pressure roller 30 makes contact with the winding surface. The speed of rotation of the winding surface, the advancement of the applicator carriage and the width of the tape are predetermind so as to give the correct amount of overlap of tape at each turn and the correct length of the envelope across the surface of the mandrel.

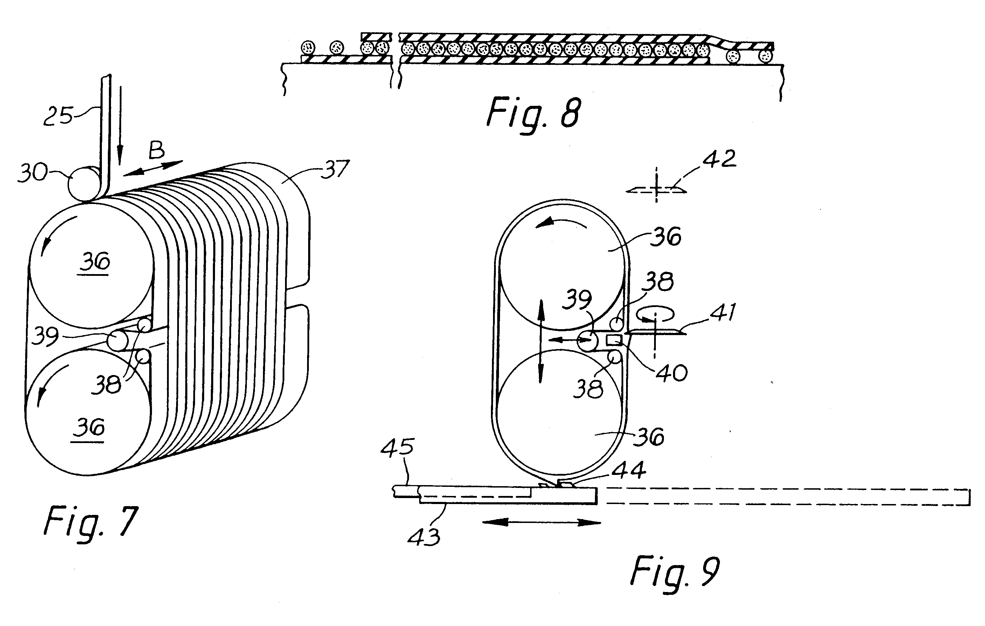

At the end of the run of tape 25 the mandrel stops in such a position that the end of the tape, when severed and laid on the surface, aligns axially with the start of the tape. The envelope of the wound tape is transverse on the mandrel and is shown in cross section in Figure 8.

The mandrel 29 (see Figures 11 and 12) is described in more detail in our co-pending United Kingdom Patent Application of even date entitled "Mandrel Means". In the mandrel means an endless belt 37 (see Figures 7 and 9) is fitted around two drums 36 and passes around a belt guide means assembly in the form of a take-up station consisting of two idler rollers 38, an adjustable roller 39 and an air flotation unit 40.

A complete range of ply widths, measured along the cords 1, may thus be obtained by suitable selection of drum centre distances.

At the ply cutting and removal station a driven circular knife 41 is brought into a position (see Figure 9) at which it cuts through the ply envelope at an angle equal to the tape helix angle to give a 90 degree cut to the cord line.

During the cutting operation high pressure air is introduced to the flotation unit 40 to produce a gas (air) jet which raises the lip of the ply material. This unit is used with low pressure air for the initial transfer of the leading end of the tape across the gap in the belt at commencement of helical winding. Having cut a plurality of ply pieces the cutter may retract to its parked position 42 and a ply removal carriage 43 (see Figures 9, 11 and 12) moves into position under the mandrel.

A set of clamps 44 mounted on the carriage 43 grips the edge of the ply material and pulls the ply off the mandrel as the carriage moves outwards. During this operation the ply material is accurately positioned onto a component carrier 45 on which the ply is transported to the building drum of a tyre building machine.

It will be appreciated from the above description of the present invention that it facilitates elimination or at least reduction of the need conventionally to provide large creels, calenders, cutting and batching equipment. Furthermore, it facilitates the use of either extensible or inextensible reinforcement material and the attainment of quick changeover times from producing material from one type of cord to producing material from another type of cord.

Rapid changes in the size of fabric for use in applying to e.g. a tyre building former may be attained by varying the total width of reinforcing tape wound helically around the mandrel means and also by adjusting its peripheral dimension.

## Claims

1. Mandrel station apparatus for the manufacture of ply fabric material comprising a mandrel means (29), strip guide means (28) associated with said mandrel means to guide strip material (25) for helical winding around the mandrel means (29) and cutter means (41) operable to move relative to the mandrel means to cut said wound material in situ on the mandrel means, characterised in that said mandrel means (29) comprises at least two rotatably mounted support drums (36), an endless support belt (37) which extends around said drums (36) and a belt guide means assembly (38,39) around which the belt extends between the drums and which assembly is arranged to guide the belt (37) whereby it defines a peripherally discontinuous mandrel support surface, said cutter means (41) being arranged for traversing movement relative to the mandrel means (29) in the region of said belt guide means assembly and said cutter means (41) being operable to move relative to the mandrel means (29) whereby whilst said wound material is in situ on the mandrel means (29) it is cut in the direction of and at a position aligned with the discontinuity in the mandrel support surface.

2. Apparatus as claimed in claim 1 characterised in that the belt guide means assembly (38,39) guides the belt (37) around a locally inwardly extending path such that there is a discontinuity in the externally visible support surface provided by the endless support surface.

3. Apparatus as claimed in claim 1 r claim 2characterised in that it comprises applicator means (30,31,32,33) for cutting, holding and feeding reinforced strip material (25) to the mandrel support surface.

4. Apparatus as claimed in any one of claims 1 - 3 characterised in that it comprises transfer means (45) for transferring the mandrel means from a strip winding station to a ply fabric cutting and removal station.

5. Apparatus as claimed in any one of claims 1 - 4, characterised in that it comprises handling means (43,44,45) for removing cut ply fabric material from the mandrel support surface.

6. Apparatus as claimed in any one of claims 1 - 5 characterised in that the cutter means (41) is operable to traverse the mandrel support surface in synchronism with rotation of the belt (37).

7. Apparatus as claimed in any one of claims 1 - 6 characterised in that it comprises lifting means (40) operable to lift relative to the mandrel means (29) a cut edge of strip material applied around the mandrel means

8. Apparatus as claimed in claim 7, characterised in that the lifting means comprises a gas jet (40).

## Patentansprüche

1. Dornstation-Apparat zum Herstellen eines Gewebelagenmaterials, umfassend ein Dornmittel (29), Streifenführungsmittel (28), die zum Dornmittel gehören, um das Streifenmaterial (25) schraubenförmig um das Dornmittel herumzuwickeln, wobei Schneidmittel (41) betätigbar sind und sich relativ zum Dornmittel bewegen, um das gewickelte Material in situ auf dem Dornmittel zu schneiden, dadurch gekennzeichnet, daß das Dornmittel (29) mindestens zwei drehbar gelagerte Auflagetrommeln (36), einen Endlostraggürtel (37), der sich um die Trommeln (36) herum erstreckt, und eine Gürtelführungsmittelanordnung (38,39) zwischen den Trommeln umfasst, um die sich der Gürtel herum erstreckt, und wobei die Anordnung so ausgelegt ist, daß sie den Gürtel (37) führt, wodurch er eine umfangsmässig diskontinuierliche Dornstützfläche ausbildet, und daß das Schneidmittel (41) relativ zum Dornmittel (29) im Bereich der Gürtelführungsmittelanordnung zur querverlaufenden Bewegung angeordnet ist, und daß das Schneidmittel (41) betätigbar ist, sich relativ zum Dornmittel (29) zu bewegen, wodurch sich das gewickelte Material, während es in situ auf dem Dornmittel (29) ist, in Richtung und an einer Position ausgerichtet zur Diskontinuität in der Dornstützfläche geschnitten wird.

2. Apparat nach Anspruch 1, dadurch gekennzeichnet, daß die Gürtelführungsmittelanordnung (38,39) den Gürtel (37) um einen sich örtlich nach innen erstreckenden Weg herum derart führt, daß eine Diskontinuität in der von aussen sichtbaren Stützfläche auftritt, die durch die endlose Stützfläche vorgesehen wird.

3. Apparat nach Anspruch 1 oder Anspruch 2, dadurch gekennzeichnet, daß er ein Applikatormittel (30,31,32,33) zum Schneiden, Halten und Zuführen des verstärkten Streifenmaterials (25) zur Dornstützfläche umfasst.

4. Apparat nach irgendeinem der Ansprüche 1 bis 3, dadurch gekennzeichnet, daß er ein Überführungsmittel (45) umfasst, zum Überführen des Dornmittels zu einer Streifenwicklungsstation zu einer Gewebelageschneid- und Entfernungsstation.

5. Apparat nach irgendeinem der Ansprüche 1 bis 4, dadurch gekennzeichnet, daß er Handhabungsmittel (43,44,45) zum Entfernen des abgeschnittenen Gewebelagenmaterials von der Dornstützfläche umfasst.

6. Apparat nach irgendeinem der Ansprüche 1 bis 5, dadurch gekennzeichnet, daß das Schneidmittel (41) betätigbar ist, um quer über die Dornstützfläche im synchronen Ablauf zur Rotation des Gürtels (37) zu laufen.

7. Apparat nach irgendeinem der Ansprüche 1 bis 6, dadurch gekennzeichnet, daß er Anhebungsmittel (40) umfasst, die betätigbar sind, relativ zum Dornmittel (29) eine abgeschnittene Kante des Streifenmaterials, die um das Dornmittel aufgetragen wird, anzuheben.

8. Apparat nach Anspruch 7, dadurch gekennzeichnet, daß das Anhebungsmittel eine Gasdüse (40) umfasst.

## Revendications

1. Appareil de poste à mandrin pour la fabrication d'un matériau textile de nappes comportant un moyen à mandrin (29), des moyens (28) de guidage de bande associés audit moyen à mandrin pour guider une matière en bande (25) afin de l'enrouler en hélice autour du moyen à mandrin (29) et un moyen de coupe (41) pouvant être manoeuvré pour se déplacer par rapport au moyen à mandrin afin de couper ladite matière enroulée, sur place, sur le moyen à mandrin, caractérisé en ce que ledit moyen à mandrin (29) comporte au moins deux tambours (36) de support montés de façon à pouvoir tourner, un ruban sans fin (37) de support qui s'étend autour desdits tambours (36) et un ensemble (38, 39) de moyens de guidage de ruban autour duquel le ruban s'étend entre les tambours et lequel ensemble est agencé à façon à guider le ruban (37) de manière qu'il définisse une surface de support de mandrin à périphérie discontinue, ledit moyen de coupe (41) étant agencé de façon à effectuer un mouvement par rapport au moyen à mandrin (29) dans la zone dudit ensemble de moyens de guidage du ruban et ledit moyen de coupe (41) pouvant être manoeuvré pour se déplacer par rapport au moyen à mandrin (29) de manière que, pendant que ladite matière enroulée se trouve sur place sur le moyen à mandrin (29), elle soit coupée dans la direction de la discontinuité dans la surface de support du mandrin, et en une position alignée avec cette discontinuité.

2. Appareil selon la revendication 1, caractérisé en ce que l'ensemble (38, 39) de moyens de guidage de ruban guide le ruban (37) le long d'un trajet s'étendant localement vers l'intérieur afin que la surface de support, visible de l'extérieur, présentée par la surface de support sans fin, ait une discontinuité.

3. Appareil selon la revendication 1 ou la revendication 2, caractérisé en ce qu'il comporte des moyens applicateurs (30, 31, 32, 33) destinés à couper, maintenir et amener une matière en bande renforcée (25) sur la surface de support du mandrin.

4. Appareil selon l'une quelconque des revendications 1 à 3, caractérisé en ce qu'il comporte un moyen de transfert (45) destiné à transférer le moyen à mandrin d'un poste d'enroulement de bande à un poste de coupe et d'enlèvement de toile de nappes.

5. Appareil selon l'une quelconque des revendications 1 à 4, caractérisé en ce qu'il comporte des moyens de manutention (43, 44, 45) pour enlever la matière textile en nappes coupée de la surface de support du mandrin.

6. Appareil selon l'une quelconque des revendications 1 à 5, caractérisé en ce que le moyen de coupe (41) peut être manoeuvré de façon à traverser la surface de support du mandrin en synchronisme avec la rotation du ruban (37).

7. Appareil selon l'une quelconque des revendications 1 à 6, caractérisé en ce qu'il comporte un moyen élévateur (40) pouvant être mis en oeuvre pour élever par rapport au moyen à mandrin (29) un bord coupé de la matière en bande appliquée autour du moyen à mandrin.

8. Appareil selon la revendication 7, caractérisé en ce que le moyen élévateur comprend un jet de gaz (40).
